# EUROPÄISCHE PATENTANMELDUNG

(11) **EP 0 663 357 A1**
(43) Veröffentlichungstag der Anmeldung: **19.07.1995**
(21) Anmeldenummer: 94119381.5
(22) Anmeldetag: 08.12.1994
(51) Int. Cl.: B65G 49/06

(54) **Glastransportwagen**

(30) Priorität: 12.01.1994 DE 9400411 U
(71) Anmelder: Glas Bischof GmbH, D-73432 Aalen (DE)
(72) Erfinder: Reiner, Frank-Thomas, 91460 Baudenbach (DE)
(74) Vertreter: Matschkur, Götz, Lindner Patent- und Rechtsanwälte

(57) **Zusammenfassung**

Glastransportwagen (1), insbesondere für Isolierglasscheiben, mit einem die Glasscheiben tragenden Boden (2), einer Rückwand (3) und einer auf dem Boden stehenden, die Glasscheiben stützenden Anlagewand (4), wobei an der Rückwand auf Horizontalschienen verschiebbar gelagerte und an den einzelnen, im wesentlichen senkrecht zu stellenden Glasscheiben angreifende Abstandshalter (12) angeordnet sind, die in ihrer Stellung derart fixierbar sind, daß die Glasscheiben in ihrer Lage zueinander und/oder bezüglich der im wesentlichen senkrecht stehenden Anlagewand festgelegt werden.

## Beschreibung

Die Erfindung betrifft einen Glastransportwagen, insbesondere für Isolierglasscheiben, mit einem die Glasscheiben tragenden Boden, einer Rückwand und einer auf dem Boden stehenden, die Glasscheiben stützenden Anlagewand.

Beim Transport von Glasscheiben mittels eines Transportwagens selbständig auf dem Boden oder beispielsweise mittels eines Lkws besteht das Problem, daß die transportierten Glasscheiben bedingt durch vom Transport unvermeidlich herrührende Bewegungen und Stöße aneinanderschlagen oder infolge eines Stoßes von selbst zerbrechen. Dies rührt von der bisher unzulänglichen Lagerung der Glasscheiben auf dem Glastransportwagen her, wo die Glasscheiben entweder lediglich aneinandergelehnt wurden oder aber in in ihrer Breite vorbestimmte Gefache eingestellt wurden, in denen sie sich aber, da sie zumeist wesentlich schmäler als die Gefachbreite sind, bewegen können. Bei einem Stoß zerschlagen sich die Glasplatten dann im Falle der ersten Transportlagerung gegenseitig, im zweiten Fall können sie sich innerhalb des Gefaches bewegen und anderseitig derart hart anstoßen, daß sie zerbrechen.

Der Erfindung liegt somit die Aufgabe zugrunde, einen Glastransportwagen zu schaffen, mittels welchem ein sicherer Transport der Glasscheiben unabhängig von den Transportbedingungen möglich ist.

Zur Lösung dieser Aufgabe ist bei einem Glastransportwagen mit den eingangs genannten Merkmalen erfindungsgemäß vorgesehen, daß an der Rückwand auf Horizontalschienen verschiebbar gelagerte und an den einzelnen, im wesentlichen senkrecht zu stellenden Glasscheiben angreifende Abstandshalter angeordnet sind, die in ihrer Stellung derart fixierbar sind, daß die Glasscheiben in ihrer Lage zueinander und/oder bezüglich der im wesentlichen senkrecht stehenden Anlagewand festgelegt werden. Die Glasscheiben werden somit mit besonderem Vorteil durch die an ihnen angreifenden Abstandshalter festgehalten, so daß eine selbständige Bewegung der Glasscheiben während des Transports nicht möglich ist. Auch werden die Glasscheiben durch die Abstandshalter voneinander beabstandet, so daß sie nicht aneinander anliegen können und eine Beschädigung einer Glasscheibe durch eine nächststehende mit besonderem Vorteil sowohl beim Transport als auch bereits beim Beladen des Transportwagens ausgeschlossen ist. Um eine sichere Anlage der Abstandshalter an den Glasscheiben zu gewährleisten, hat es sich als äußerst zweckmäßig herausgestellt, daß die Abstandshalter erfindungsgemäß als von der Schiene vorspringende, flache Platten ausgebildet sind, die in ihrer jeweiligen Position mittels an der Schiene angreifenden Spannelemente fixierbar sind, so daß ein in Position gebrachter Abstandshalter mit besonderem Vorteil einfachst in dieser an der Schiene fixiert wird und somit die Glasscheibe quasi festgespannt wird. Dabei können die Abstandshalter erfindungsgemäß an den Spannelementen direkt befestigt sein, also lediglich die Spannelemente auf der Schiene geführt werden, alternativ dazu jedoch ist bevorzugt vorgesehen, daß die Abstandshalter und die Spannelemente separat voneinander auf der Schiene geführt sind.

Um die Handhabung und das "Anlegen" der Abstandshalter möglichst einfach zu gestalten, hat es sich erfindungsgemäß als äußerst zweckmäßig erwiesen, daß die Schiene als querschnittlich runde Stange ausgebildet ist und jede Platte mit einer von der Stange zu durchsetzenden, eine Horizontalbewegung erlaubenden Durchbrechung versehen ist, so daß die Platten mit besonderem Vorteil einfachst auf der Stange in ihre entsprechende, an der Glasplatte anliegende Position verschoben werden können. Um das Einbringen der Glasscheiben und das Anlegen der Abstandshalter noch weiter vereinfachen zu können, kann in weiterer Ausgestaltung der Erfindung vorgesehen sein, daß die Rückwand von einem die Stangen halternden Gestellrahmen gebildet wird, und daß die Platten vertikal von einer Arbeitsstellung in eine Nichtarbeitsstellung mit den Stangen als Schwenkachsen schwenkbar sind, so daß die Abstandshalter beispielsweise nach erfolgtem, ohne Behinderung durch vorstehende Abstandshalter möglichen Einstellen der Glasscheibe einfachst in ihre Arbeitsstellung geschwenkt und an der Glasscheibe angelegt werden können. Dabei hat es sich als erfindungsgemäß äußerst zweckmäßige Lösung herausgestellt, daß jeder Stange eine zweite Stange zum Auflagern der Platten in Arbeitsstellung, die von der Lagebeziehung der zweiten Stange zu den Platten bestimmt ist, zugeordnet ist.

Um eine möglichst sichere und vor allem schnelle und einfach zu handhabende Fixierung der Abstandshalter in ihrer jeweiligen Position zu ermöglichen, kann in weiterer Ausgestaltung der Erfindung vorgesehen sein, daß die Spannelemente als auf der Stange verschiebbare, mittels einer Befestigungseinrichtung, insbes. einer Spannschraube, auf der Stange fixierbare Spannhülsen ausgebildet sind, die ebenso wie die Abstandshalter einfachst auf der Stange in Position geschoben und angezogen werden, wodurch die jeweilige Glasplatte mit besonderem Vorteil dann entweder bezüglich der Anlagewand oder bezüglich der ihr nebengeordneten Glasscheibe sicher gespannt ist. Je nach Anwendungszweck hat es sich dabei als erfindungsgemäß vorteilhaft herausgestellt, daß die Anlagewand seitlich und/oder im wesentlichen mittig am Boden angeordnet ist.

Um Beschädigungen der eingebrachten Glasscheiben durch die Abstandshalter beim Transport gänzlich auszuschließen, kann in weiterer Ausgestaltung der Erfindung vorgesehen sein, daß die Abstandshalter und/oder die Anlagewand mit Schutzüberzügen, insbesondere Gummiüberzügen, versehen sind, die eine gedämpfte Anlage der Abstandshalter bzw. Anlagewand an den Glasscheiben ermöglichen. Zur Vereinfachung des Bewegens des Glastransportwagens können in Weiterbildung der Erfindung am Boden angeordnete Rollen vorgesehen sein, wobei zu einer allseitigen Rollenanordnung als Alternativlösung erfindungsgemäß ferner vorgesehen sein kann, daß die Rollen lediglich im Bereich unterhalb der Rückwand angeordnet sind und an der gegenüberliegenden Seite Stützfüße und eine Eingriffseinrichtung für eine Hub- und Zug-Einrichtung angeordnet ist, so daß so mit besonderem Vorteil ein unbeabsichtigtes Bewegen bzw. Wegrollen des Glastransportwagens verhindert wird und zusätzliche Befestigungs- oder Bremseinrichtungen beispielsweise im Rollenbereich entfallen können.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine perspektivische Ansicht eines Glastransportwagens einer ersten Ausführungsform,
- Fig. 2: eine perspektivische Teilansicht des Schienenbereichs in Richtung des Pfeils II aus Fig. 1,
- Fig. 3: eine Schnittansicht in Richtung des Pfeils III aus Fig. 2,
- Fig. 4: eine Rückseitenansicht des Glastransportwagens aus Fig. 1 in Richtung des Pfeils IV, und
- Fig. 5: eine perspektivische Ansicht eines Glastransportwagens einer zweiten Ausführungsform.

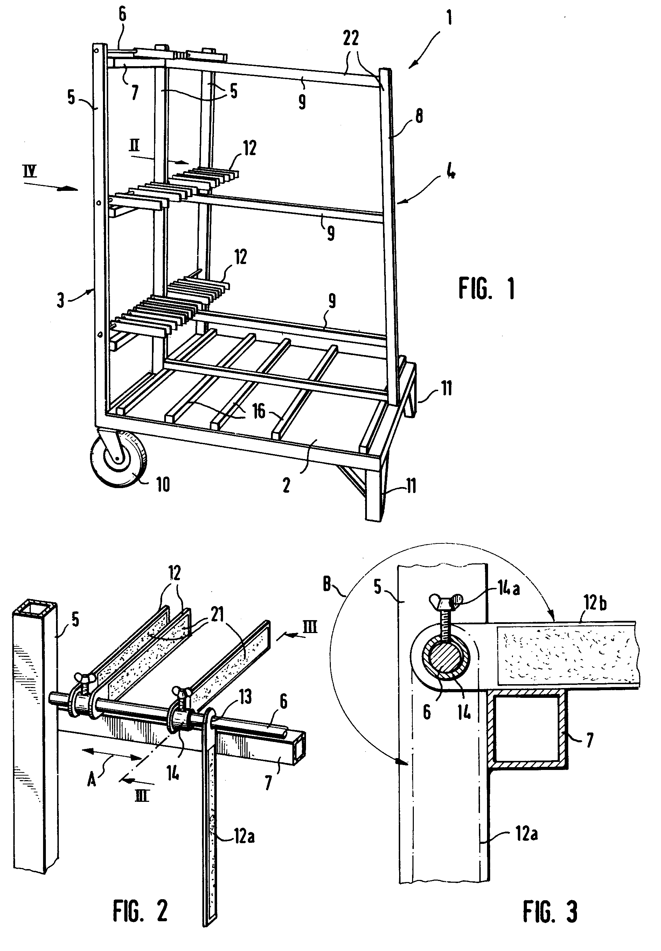

Fig. 1 zeigt einen Glastransportwagen 1 einer ersten Ausführungsform mit einem im gezeigten Beispiel von einer Bodenplatte gebildeten Boden 2, einer am Boden 2 endseitig senkrecht aufstehenden Rückwand 3 und einer am Boden 2 mittig angeordneten, senkrecht zur Rückwand 3 verlaufenden Anlagewand 4. Die Rückwand 3 wird durch seitlich und mittig angeordnete Vertikalstreben 5 gebildet, zwischen denen sich horizontal verlaufende Stangen 6, 7 erstrecken, welche als Führungs- bzw. Auflagestangen für die daran angeordneten bzw. damit in Verbindung stehenden Abstandsplatten 12 dienen, was bezüglich Fig. 2 näher beschrieben werden wird. Um die Stangen 6 mit Abstandshaltern 12 und den später noch zu beschreibenden Spannelementen bestücken zu können, sind diese, ebenso wie gegebenenfalls die Stangen 7, an den Vertikalstreben 5 lösbar befestigt. Ebenso wie die Rückwand 3 ist auch die Anlagewand 4 aus einer im wesentlichen senkrecht verlaufenden Vertikalstrebe 8 und Horizontalstreben 9 gebildet. Um den Glastransportwagen 1 bewegen zu können, sind an der Unterseite des Bodens 2 im Bereich der Rückwand 3 Rollen 10 und auf der den Rollen 10 gegenüberliegenden Bodenseite Standfüße 11 angeordnet, so daß mittels einer im Bereich zwischen den Standfüßen 11 angreifenden Hub-Zug-Einrichtung der Glastransportwagen einfachst etwas angehoben wird und verfahren werden kann, und bedingt durch die Standfüße 11 bei stehendem Glastransportwagen 1 ein unbeabsichtigtes Bewegen bzw. Fortrollen ausgeschlossen ist.

Fig. 2 zeigt nunmehr in einer vergrößerten Detailansicht den Bereich der ersten und zweiten Stange 6, 7 mit den daran angeordneten Abstandsplatten 12. Die Abstandsplatten 12, die eine im wesentlichen schmale, rechteckige Form aufweisen, sind auf der Stange 6 verschiebbar geführt (Pfeil A), was durch eine an jeder Abstandsplatte 12 angebrachte Durchbrechung 13, die von der Stange 6 durchsetzt wird, einfachst realisiert ist. Infolge dieser Ausbildung der Führung können die Abstandsplatten 12 einfachst um die als Schwenkachse dienende Stange 6 herumgeschwenkt werden, um in der Nichtarbeitsstellung an der Stange 6 senkrecht nach unten zu hängen, wie dies in Fig. 2 durch die Abstandsplatte 12a dargestellt ist. Um nun in die Arbeitsstellung gebracht zu werden, in welcher dann die Abstandsplatten 12 an den eingebrachten Glasscheiben zwecks Fixierung derselben angreifen können, wird eine nach unten hängende, in der Nichtarbeitsstellung befindliche Abstandsplatte nach oben um die Stange 6 herumgeschwenkt (Pfeil B), bis sie auf der Oberseite der zweiten Stange 7, die als Anlagestange dient, aufliegt, wie dies in Fig. 3 durch die Abstandsplatte 12b dargestellt ist. In dieser Stellung ragen die Abstandsplatten 12 dann in den Zwischenbereich der auf dem Glastransportwagen 1 abgestellten Glasscheiben ein und können seitlich an den Glasscheiben angreifen, wobei die Anpassung an die jeweiligen Glasscheiben und die Beabstandung derselben einfachst durch Verschieben der entsprechenden Abstandshalter 12 auf der Stange 6 erfolgt.
Damit ein Verrutschen der einmal an die eingebrachten Glasscheiben angelegten Abstandshalter 12 verhindert wird, was ja zu einem gleichzeitigen Verrutschen der Glasscheiben und damit möglicherweise zum Bruch derselben führen könnte, sind an der Stange 6 ebenfalls verschiebbar gelagerte (Pfeil A), an den Abstandsplatten 12 angreifende Spannelemente in Form von Spannhülsen 14 angeordnet, die mittels Spannschrauben 14a einfachst in ihrer entsprechenden, an der Abstandsplatte 12 angreifenden und diese gegen die Glasscheibe fixierenden Stellung an der Stange 6 verschraubt werden. Neben einer derartigen, quasi unlösbaren Anordnung der Abstandshalter 12 und der Spannelemente 14 an der Stange 6 ist jedoch auch eine lösbare Anordnung beispielsweise in Form von an einer querschnittlich rechteckigen Stange mittels Hacken einhängbaren Abstandshaltern und auf die Stange aufsetzbaren Spannelementen möglich, ein Verschwenken zwischen unterschiedlichen Stellungen ist dann allerdings nicht möglich.

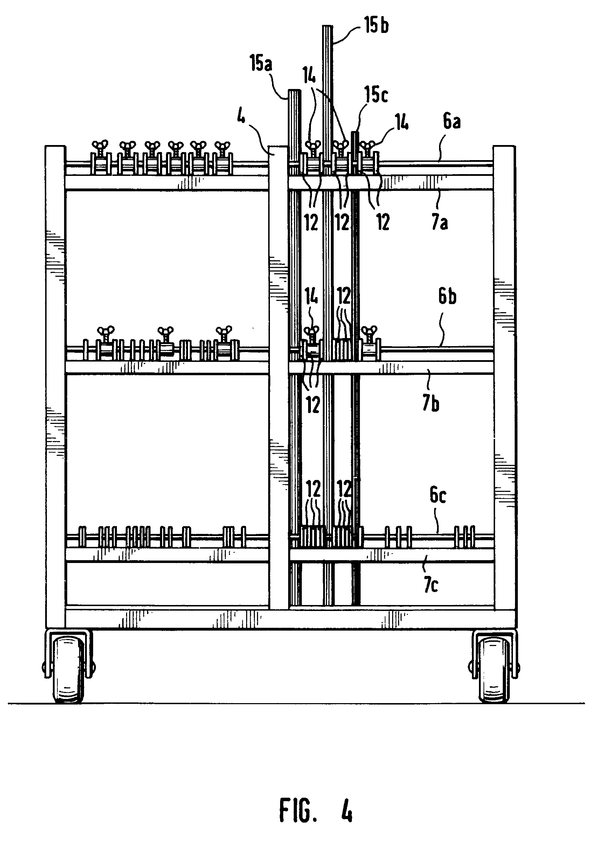

Fig. 4 zeigt eine rückseitige Ansicht des Glastransportwagens 1 aus Fig. 1 mit eingebrachten Glasscheiben 15a, 15b und 15c. Die Rückwand 3 des in Fig. 4 gezeigten Transportwagens 1 weist dabei drei Stangen 6a, 6b, 6c auf, wobei an der oberen Stange 6a im gezeigten Beispiel zwischen zwei Spannhülsen 14 jeweils zwei Abstandsplatten 12 angeordnet sind, wohingegen an der mittleren Stange 6b mehrere Abstandsplatten 12 zwischen zwei Spannhülsen 14 gebracht und an der unteren Stange 6c nur noch Abstandshalter 12 geführt sind. Sämtliche Abstandshalter 12 sind mit einem Schutzüberzug 21 beispielsweise aus Gummi oder Schaumstoff zum Schutz der anliegenden Glasplatten überzogen. Zum Beladen des Glastransportwagens 1, der infolge der mittigen Anordnung der Anlegewand 4 beidseitig beladen werden kann, wird zunächst die erste Glasscheibe 15a direkt in Anlage zu der Anlagewand 4 auf den mit den Tragestreben 16 versehenen Boden 2 gebracht, wobei die Glasplatte 15a im Bereich der Rückwand 3 annähernd an den den jeweiligen Stangen 6a zugeordneten Stangen 7a, 7b und 7c anliegt. Zur Fixierung der Glasplatte 15 in ihrer Lage bezüglich der Anlagewand 4, die zum Schutz der Glasplatten ebenfalls mit einem Schutzüberzug 22 versehen ist, wird nun zunächst oberseitig ein Abstandshalter 12, der in seine Arbeitsstellung gebracht ist, bis an die Glasscheibe 15a zur Anlage herangeschoben, wonach das ihm benachbarte Spannelement 14 in Anlage zum Abstandshalter 12 gebracht wird und an der Stange 6a verschraubt wird, so daß beide in ihrer jeweiligen Position und damit auch die Glasscheibe 15a fixiert sind. Auf der Stange 6b wird nun gleichermaßen verfahren, d.h. auch hier wird ein Abstandshalter 12 und eine Spannhülse 14 in Anlage zur Glasscheibe 15a gebracht und verschraubt. Infolge dieser bereits oberseitigen und mittigen Fixierung der Scheibe 15a ist es nicht erforderlich, auch an der untersten Stange 6c Spannhülsen vorzusehen, so daß hier lediglich mehrere Abstandshalter 12 in Anlage zur Glasscheibe 15a angeordnet werden, wobei Spannhülsen jedoch dann vorzusehen sind, wenn kleine, von den an den Stangen 6a und 6b geführten Haltern 12 beziehungsweise Hülsen 14 nicht mehr fixierbare Glasplatten eingestellt werden sollen.
Soll nun eine zweite Glasplatte 15b eingestellt werden, so wird neben der ersten an der Stange 6a verspannten Spannhülse 14 ein weiterer Abstandshalter 12a in Arbeitsstellung gebracht, ebenso wird an der Stange 6b verfahren. Die zweite Glasplatte 15b wird nun in Anlage zu diesem Abstandshalter eingestellt, anschließend wird auf der anderen Seite der Scheibe 15b wiederum ein Abstandsahalter 12 in Anlage mit der Scheibe 15b gebracht und mittels einer weiteren Spannhülse 14 in seiner Position fixiert, so daß die Scheibe 15b keinerlei seitliche Bewegungen ausführen kann, was ja zu einer Beschädigung dieser als auch anderer Scheiben führen könnte. Ferner ist durch die von den Abstandshaltern 12 und den Hülsen 14 bewirkte Beabstandung ein gefahrloses Nebenordnen einer Scheibe neben bereits eingestellte möglich, ein Beschädigen wie es bei aneinanderzulehnenden Scheiben möglich ist, ist bei sachgerechter Handhabung ausgeschlossen. Auf der Stange 6b sind im gezeigten Beispiel lediglich mehrere Abstandshalter 12 in Anlage zur Scheibe 15b gebracht, deren gesamte Abstandsbreite i.w. der von den an der Stange 6a angeordneten Haltern 12 und der Hülse 14 entspricht, was generell für alle Beabstandungsbereiche gilt, so daß die Scheiben sicher und spannungsfrei eingestellt werden können. Jedoch könnte auch hier eine Spannhülse zwischengeordnet sein. Gleiches gilt für die Stange 6c, wo wiederum mehrere Abstandshalter 12 an die Scheibe 15b herangeschoben sind. Zur Einstellung und Fixierung einer dritten Glasscheibe 15c wird in der eben beschriebenen Weise erneut verfahren, so daß nach und nach eine Vielzahl von Glasscheiben 15 eingestellt werden können, die jeweils in ihrer Lage fixiert sind. Dabei ist die Anordnung der Spannhülsen 14 an den unterschiedlichen Stangen 6a, 6b, 6c völlig willkürlich, solange es gewährleistet ist, daß die eingebrachten Scheiben durch entsprechende Zwischenordnung von Abstandshaltern 12 und/oder Spannhülsen 14 in ihrer Position fixiert sind. Im einfachsten Ausführungsbeispiel wäre es sogar denkbar, auf der Stange 6a als Abschlußelement zu den Vertikalstreben 5 hin lediglich eine einzige Spannhülse 14 und ihr folgend eine Vielzahl von Abstandshaltern anzuordnen, die nach entsprechender Zwischenordnung zwischen die eingestellten Scheiben von der einzigen Hülse 14 dann verspannt und in ihrer jeweiligen Stellung ebenso wie die Glasscheiben gehaltert wären. Infolge der oberseitigen Verspannung und der durch das Eigengewicht bedingten sicheren bodenseitigen Auflage wären an den Stange 6b, 6c auch bei unterschiedlich großen Scheiben keinerlei Spannhülsen mehr erforderlich, da sich die Scheiben ja auch gegenseitig fixieren.

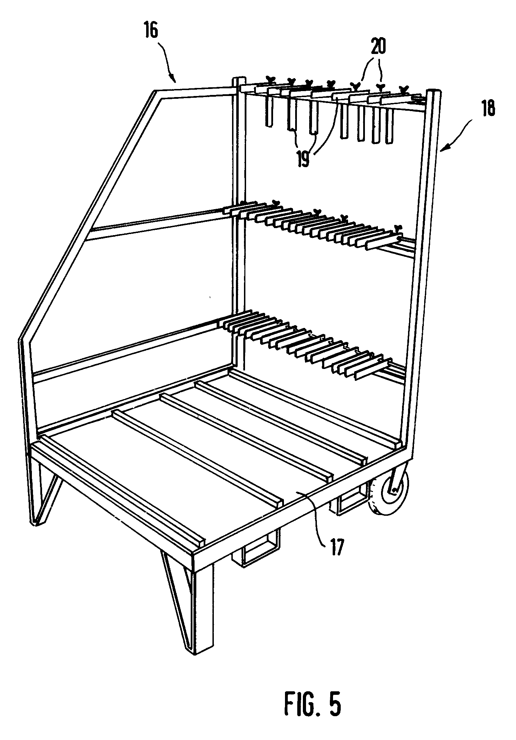

Fig. 5 zeigt nunmehr eine weitere Ausführungsform eines Glastransportwagens 16, welcher in ähnlicher Weise zum Glastransportwagen 1 aufgebaut ist. Bei der hier gezeigten Ausführungsform jedoch ist die Anlagewand 16 seitlich des Bodens 17 und der Rückwand 18 angeordnet, so daß bei dieser Ausführungsform lediglich ein einseitiges Be- bzw. Entladen der Glasscheiben möglich ist. Die Funktionsweise der an der Rückwand 18 angeordneten, beweglichen Abstandshalter 19 und Spannhülsen 20 jedoch ist die gleiche wie zuvor beschrieben.

## Patentansprüche

1. Glastransportwagen, insbesondere für Isolierglasscheiben, mit einem die Glasscheiben tragenden Boden, einer Rückwand und einer auf dem Boden stehenden, die Glasscheiben stützenden Anlagewand, dadurch gekennzeichnet, daß an der Rückwand (3) auf Horizontalschienen verschiebbar gelagerte und an den einzelnen, im wesentlichen senkrecht zu stellenden Glasscheiben (15a,15b,15c) angreifende Abstandshalter (12) angeordnet sind, die in ihrer Stellung derart fixierbar sind, daß die Glasscheiben (15a,15b,15c) in ihrer Lage zueinander und/oder bezüglich der im wesentlichen senkrecht stehenden Anlagewand (4) festgelegt werden.

2. Glastransportwagen nach Anspruch 1, dadurch gekennzeichnet, daß die Abstandshalter (12) als von der Schiene vorspringende, flache Platten ausgebildet sind und in ihrer jeweiligen Position mittels an der Schiene angreifenden Spannelementen fixierbar sind.

3. Glastransportwagen nach Anspruch 2, dadurch gekennzeichnet, daß die Abstandshalter (12) an den Spannelementen befestigt sind und lediglich die Spannelemente auf der Schiene geführt sind.

4. Glastransportwagen nach Anspruch 2, dadurch gekennzeichnet, daß die Abstandshalter (12) und die Spannelemente separat voneinander auf der Schiene geführt sind.

5. Glastransportwagen nach Anspruch 4, dadurch gekennzeichnet, daß die Schiene als querschnittlich runde Stange (6) ausgebildet ist und jede Platte (12) mit einer von der Stange (6) zu durchsetzenden, eine Horizontalbewegung erlaubenden Durchbrechung (13) versehen ist.

6. Glastransportwagen nach Anspruch 5, dadurch gekennzeichnet, daß die Rückwand (3) von einem die Stangen (6) halternden Gestellrahmen gebildet wird, und daß die Platten (12) vertikal von einer Arbeitsstellung in eine Nichtarbeitsstellung mit den Stangen (6) als Schwenkachsen schwenkbar sind.

7. Glastransportwagen nach Anspruch 6, dadurch gekennzeichnet, daß jeder Stange (6) eine zweite Stange (7) zum Auflagern der Platten (12) in Arbeitsstellung zugeordnete ist.

8. Glastransportwagen nach einem der Ansprüch 3 bis 7, dadurch gekennzeichnet, daß die Spannelemente als auf der Stange (6) verschiebbare, mittels einer Befestigungseinrichtung, insbesondere einer Spannschraube (14a) an der Stange (6) fixierbare Spannhülsen (14) ausgebildet sind.

9. Glastransportwagen nach einem der vorangehenden Ansprüche, dadurch gekennzeichnet, daß die Anlagewand (4) seitlich und/oder im wesentlichen mittig am Boden (2) angeordnet ist.

10. Glastransportwagen nach einem der vorangehenden Ansprüche, dadurch gekennzeichnet, daß die Abstandshalter (12) und/oder die Anlagewand (4) mit Schutzüberzügen (21,22), insbesondere Gummiüberzügen versehen sind.

11. Glastransportwagen nach einem der vorangehenden Ansprüche, gekennzeichnet durch am Boden (2) angeordnete Rollen (10).

12. Glastransportwagen nach Anspruch 11, dadurch gekennzeichnet, daß die Rollen (10) lediglich im Bereich unterhalb der Rückwand (3) angeordnet sind und an der gegenüberliegenden Seite Stützfüße (11) und ein Eingriffeinrichtung für eine Hub- und Zug-Einrichtung angeordnet ist.
